# EUROPÄISCHE PATENTSCHRIFT

(11) **EP 3 339 886 B1**
(45) Veröffentlichungstag und Bekanntmachung des Hinweises auf die Patenterteilung: **13.02.2019**
(21) Anmeldenummer: 16206061.0
(22) Anmeldetag: 22.12.2016
(51) Int. Cl.: G01S 17/08, G01S 7/481, G01S 7/486, G01J 1/44, G01S 17/89, G01S 7/497

(54) **LICHTEMPFÄNGER MIT EINER VIELZAHL VON LAWINENPHOTODIODENELEMENTEN UND VERFAHREN ZUR VERSORGUNG MIT EINER VORSPANNUNG**
LIGHT RECEIVING DEVICE WITH A PLURALITY OF AVALANCHE PHOTO DIODE ELEMENTS AND METHOD FOR SUPPLYING WITH A PRELOAD
RÉCEPTEUR DE LUMIÈRE COMPRENANT UNE PLURALITÉ D'ÉLÉMENTS À PHOTODIODE À AVALANCHE ET PROCÉDÉ D'ALIMENTATION EN PRÉ-TENSION

(43) Veröffentlichungstag der Anmeldung: 27.06.2018
(73) Patentinhaber: Sick AG, 79183 Waldkirch (DE)
(72) Erfinder: Clemens, Klaus, 79367 Weisweil (DE); Seitz, Stefan, 79341 Kenzingen (DE); Tschuch, Dr. Sebastian, 79104 Freiburg (DE); Hug, Gottfried, 79183 Waldkirch (DE)

(56) Entgegenhaltungen:
- DE-U1-202013 105 389
- US-A1- 2011 240 865
- US-A1- 2013 153 754

## Beschreibung

Die Erfindung betrifft einen Lichtempfänger mit einer Vielzahl von Lawinenphotodiodenelementen und ein Verfahren zu deren Versorgung mit einer Vorspannung nach dem Oberbegriff von Anspruch 1 beziehungsweise 15.

Ein Lichtempfänger hat die Funktion, aus einfallendem Empfangslicht ein elektrisches Signal zu erzeugen. Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung (Breakdownvoltage) vorgespannt (Bias), so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPADs (Single-Photon Avalanche Diode) bezeichnet.

Die hohe Strahlungsempfindlichkeit von SPADs wird in vielen Anwendungen genutzt. Dazu zählen die Medizintechnik mit CT, MRT oder Blutanalysen, die optische Messtechnik einschließlich Spektroskopie, Entfernungsmessung und dreidimensionaler Bildgebung, die Strahlendetektion in der Kernphysik oder die Verwendungen in Teleskopen für die Astrophysik.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt solange für weitere Messungen aus. Deshalb ist es üblich, mehrere SPADs zusammenzuschalten und statistisch auszuwerten. Trotzdem führen größere Lichtleistungen zu Übersättigungseffekten einzelner Pixel oder ganzer Bereiche. Gerade wenn ein großer Dynamikbereich abgedeckt werden soll, können so wichtige Informationen über das Empfangslicht verloren gehen.

Die Durchbruchspannung ist die minimale benötigte Vorspannung zur Aufrechterhaltung des gewünschten Geiger-Modus für ein SPAD. Genaugenommen sind jedoch bei diesem Grenzwert die Detektions-Effizienz wie die Verstärkung immer noch Null. Erst wenn die Vorspannung die Durchbruchspannung übersteigt, werden einfallende Photonen in entsprechende Geigerstromimpulse umgesetzt. Bei eine idealen Photonen-Detektions-Effizienz (PDE) von 100% würde jedes einfallende Photon einen Geigerstromimpuls auslösen. Praktisch gelingt das nicht vollständig. Die PDE kann jedoch über die Höhe der angelegten Vorspannung beeinflusst werden.

Um den Arbeitspunkt der SPADs und entsprechend auch deren Auslöseempfindlichkeit über eine von außen bereitgestellte Vorspannung einzustellen, werden die anoden- und kathodenseitigen Anschlüsse der einzelnen SPAD-Zellen des Lichtempfängers direkt herausgeführt. Dadurch sind alle SPADs mit einer gemeinsamen Vorspannung betrieben. Anstelle der Vorspannung wird meist nur die Überspannung, also die Differenz aus Vorspannung und Durchbruchspannung betrachtet. Die Auslösewahrscheinlichkeit steigt mit der Überspannung. Dabei gibt es in der Praxis eine sinnvolle obere Grenze, weil die Auslösewahrscheinlichkeit bei höheren Überspannungen in Begrenzung geht und unerwünschte Rauschanteile überproportional mit ansteigen. Der mittels Überspannung eingestellte Arbeitspunkt ermöglicht eine gewisse Anpassung des Lichtempfängers, wird aber vielen Situationen mit stark unterschiedlichen oder auch zeitlich schwankenden Empfangslichtverhältnissen nicht gerecht.

Die WO 2011/117309 A2 schlägt vor, neben der Anode und Kathode für das Anlegen der Vorspannung eine dritte Elektrode an dem SPAD-Detektor vorzusehen, über welche der Geigerstrom kapazitiv ausgekoppelt wird. Dadurch soll verhindert werden, dass das Auslesen durch Schaltelemente der Vorspannung verzögert wird. Eine verbesserte Anpassung des Lichtempfängers an Umgebungs- oder Anwendungsbedingungen ist dadurch aber nicht gegeben.

Die US 2013/0153754 A1 offenbart eine Vorrichtung zur Abstandsmessung nach einem Lichtlaufzeitverfahren mit einem Lichtempfänger, der eine Vielzahl von SPADs aufweist. Dabei soll die Leistungsaufnahme begrenzt werden, indem nur ein Teil der SPADs tatsächlich mit einer Vorspannung oberhalb der Durchbruchspannung versorgt wird. Dazu weist die Hochspannungsversorgung mehrere Leitungen auf, die jeweils mit einzelnen oder Gruppen SPADs verbunden sind. Mittels einer Umschaltsteuereinheit kann selektiv entschieden werden, welche der Leitungen die Hochspannung übertragen.

Aus der US 2011/0240865 A1 ist ein Lichtsensor mit hohem Dynamikbereich bekannt. Die Pixel des Lichtsensors sind als SPADs ausgebildet. Eine Steuerung überwacht die Intensität des einfallenden Lichts. Wenn es zu schwach ist, wird von einem linearen Modus in einen Geiger-Modus gewechselt, indem die SPADs mit einer Vorspannung oberhalb der Durchbruchspannung betrieben werden. Bei zu starkem Licht wird umgekehrt in den linearen Modus umgeschaltet. Die jeweils benötigte Vorspannung wird von einer Vorspannungseinheit bereitgestellt.

Die DE 20 2013 105 389 U1 beschreibt einen optoelektronischen Sensor mit im Geiger-Modus betriebenen Lawinenphotodiodenelementen. Der Sensor umfasst in einigen Ausführungsformen ein Temperaturmesselement, das mit weiteren Funktionselementen wie dem Lichtempfänger oder der Auswertungseinheit Teil derselben integrierten Schaltung sein kann. Dadurch wird eine Temperaturkompensation beispielsweise der Versorgungsspannung ermöglicht.

Es ist daher Aufgabe der Erfindung, die Erfassung mit einem gattungsgemäßen Lichtempfänger zu verbessern.

Diese Aufgabe wird durch einen Lichtempfänger mit einer Vielzahl von Lawinenphotodiodenelementen und ein Verfahren zu deren Versorgung mit einer Vorspannung nach Anspruch 1 beziehungsweise 15 gelöst. Wird an die Lawinenphotodiodenelemente eine Vorspannung oberhalb der Durchbruchspannung angelegt, so arbeiten sie im Geiger-Modus. Die Erfindung geht nun von dem Grundgedanken aus, die Vorspannung und damit die Detektionsempfindlichkeit lokal anzupassen. Dazu stehen auf dem Lichtempfänger mehrere unterschiedliche Vorspannungen zur Verfügung, die von außen oder durch eine Schaltung des Lichtempfängers an Vorspannungsanschlüssen für die Lawinenphotodiodenelemente bereitgestellt werden. Die Lawinenphotodiodenelemente wiederum werden in mehrere, also mindestens zwei Gruppen unterteilt, deren Größe je nach Bedarf bis hin zu nur jeweils einem einzigen Lawinenphotodiodenelement festgelegt sein kann. Indem eine Gruppe von jeweils einem der Vorspannungsanschlüsse versorgt wird, werden die zugehörigen Lawinenphotodiodenelemente mit einer der unterschiedlichen Vorspannungen versorgt, und daher sind die Gruppen unterschiedlich empfindlich. Die Anzahl an verfügbaren Vorspannungen und Gruppen ist grundsätzlich voneinander unabhängig, und es können mehrere Gruppen mit der gleichen Vorspannung versorgt werden, und ebenso kann eine verfügbare Vorspannung von keiner Gruppe genutzt sein.

Die Erfindung hat den Vorteil, dass der Lichtempfänger wesentlich flexibler einsetzbar ist. Das ermöglicht eine Kostenreduktion durch weniger Variantenvielfalt und höhere Stückzahlen. Der Lichtempfänger wird außerdem deutlich robuster gegen veränderliche Umgebungsbedingungen. Die lokal variierenden Vorspannungen wirken wie eine anpassbare elektronische Blende, die gezielt für eine inhomogene Empfindlichkeit des Lichtempfängers sorgt, indem Empfangsbereiche elektronisch ausgeblendet oder deren Signale gezielt gedämpft werden. Dadurch wird das Optikdesign, dem somit Aufgaben abgenommen sind, wesentlich vereinfacht, indem beispielsweise Blenden weggelassen oder weniger komplexe Linsen eingesetzt werden. Das unterstützt auch eine weitere Miniaturisierung eines Sensors, in dem der Lichtempfänger eingesetzt ist, und es ergibt sich eine größere Freiheit beim Platzieren von Komponenten. Der Lichtempfänger hat durch die elektronische Blende mittels lokaler Anpassung von Vorspannungen bereits elektronisch die Möglichkeit, mit einem hohen Dynamikumfang und Inhomogenitäten des Empfangslichts umzugehen. Eine einfachere Optik reduziert auch die Toleranzkette und steigert die Prozesssicherheit. Weiterhin wird eine elektronische Empfangsjustage möglich, indem die lokale Empfindlichkeit bei nur grober mechanischer Justierung elektronisch an die Gegebenheiten angepasst wird, beispielsweise eine elektronische Blende um einen Empfangslichtfleck gelegt wird. Dies erfordert keinen mechanischen oder manuellen Geräteeingriff, keine mechanische Sicherung gegen Dejustage, nicht einmal eine Zugänglichkeit des Gerätes, und ist einfacher automatisierbar. Die Integration der Lawinenphotodiodenelemente auf einem Lichtempfänger lässt im Gegensatz zu diskreten Lawinenphotodiodenelementen wesentlich mehr Anordnungen zu, bei denen ungenutzte, nicht lichtempfindliche Zwischenbereiche und Bestückungstoleranzen zwischen den diskreten Bauteilen entfallen.

Die Lawinenphotodiodenelemente einer Gruppe sind bevorzugt wahlweise mit einer der unterschiedlichen Vorspannungen versorgbar. Dies macht die Anpassbarkeit an bestimmte Lichtverhältnisse oder Anwendungen flexibel. Die Wahl, welche Gruppe mit welcher Vorspannung versorgt ist, bedeutet eine Konfiguration oder Umkonfiguration und kann zu verschiedensten Zeitpunkten erfolgen, sei es durch Auswahl zwischen vorgegebenen Modi, schon ab Werk, bei der Inbetriebnahme oder dynamisch während des Betriebs. Ein Anwendungsbeispiel ist ein Abblenden, also Deaktivieren oder Dämpfen durch eine geringere Vorspannung, für Lawinenphotodiodenelemente in einem ansonsten durch zu viel Lichteinfall übersteuerten Bereich.

Zwischen den Lawinenphotodiodenelementen zumindest einer Gruppe und den Vorspannungsanschlüssen ist bevorzugt ein Umschaltelement angeordnet. Dieses Umschaltelement ist ein Mittel, die Wahl einer Vorspannung für eine Gruppe zu treffen. Das Umschaltelement ist vorzugsweise ein Mehrfachschalter zwischen nicht nur zwei, sondern mehreren oder allen verfügbaren unterschiedlichen Vorspannungen. Das Umschaltelement kann codiert, insbesondere binär codiert arbeiten, um mit möglichst wenigen Schaltern auch bei einer etwas größeren Anzahl verfügbarer Vorspannungen auszukommen.

Mindestens zwei der mehreren Vorspannungsanschlüsse sind bevorzugt nach außen geführt. Insbesondere sind alle Vorspannungsanschlüsse nach außen geführt. Dort können externe unterschiedliche Vorspannungen bereitgestellt werden. Externe Vorspannungsanschlüsse ermöglichen ein sehr einfaches Schaltungskonzept, bei dem die Anschlüsse und die Vorspannungen von außen zugänglich und steuerbar sind.

Mindestens einer der Vorspannungsanschlüsse ist vorzugsweise intern, wobei mindestens ein Spannungsanpassungselement vorgesehen ist, um unterschiedliche Vorspannungen aus einer externen Spannung zu erzeugen. Das Spannungsanpassungselement passt die externe Vorspannung um eine Differenzspannung an, und mit weiteren Spannungsanpassungselementen oder mehreren Differenzspannungen entstehen mehrere Vorspannungen. Selbstverständlich kann auch die externe Spannung als solche als eine der unterschiedlichen Vorspannungen genutzt werden, insbesondere durch Wahl einer Differenzspannung Null. Auch eine Mischform mit mehreren nach außen geführten Vorspannungsanschlüssen ist denkbar, wobei aber vorzugsweise alle Vorspannungsanschlüsse intern sind. Dann ist nur noch eine einzige externe Spannung erforderlich, um alle Vorspannungen abzuleiten und somit intern bereitzustellen, was zu erheblichen Einsparungen bei externen Schaltungsaufwänden mit Platz- und Kostenvorteilen führt.

Das Spannungsanpassungselement ist bevorzugt spannungsabziehend ausgebildet. Dann wird vorzugsweise eine externe Spannung an den Lichtempfänger angelegt, die zu hoch ist beziehungsweise der höchsten benötigten Vorspannung entspricht, um eine ausreichende Reserve für den Spannungsabzug vorzuhalten. Schaltungstechnisch ist es besonders einfach, wenn die Kompensation stets durch Spannungsabzug erfolgt. Möglich wäre aber auch alternativ, wenn man den erhöhten Aufwand in Kauf nimmt, eine positive Kompensation, welche die von außen angelegte Vorspannung anhebt, etwa durch eine Ladungspumpe.

Das Spannungsanpassungselement weist bevorzugt eine Ansteuerung auf, um die zu erzeugende Vorspannung einzustellen. Diese Ansteuerung ist insbesondere von außen zugänglich, beispielsweise als digitale Ansteuerung. Dadurch werden die Werte der verfügbaren unterschiedlichen Vorspannungen variabel, und das kann genutzt werden, um geeignete Empfindlichkeitsstufen bereitzustellen, aber auch die Empfindlichkeit der mit der jeweiligen Vorspannung verbundenen Gruppen von Lawinenphotodiodenelemente anzupassen. Somit gibt es prinzipiell zwei Möglichkeiten für eine Veränderung der Empfindlichkeit, nämlich mit welcher der unterschiedlichen Vorspannungen eine Gruppe von Lawinenphotodiodenelementen verbunden ist und wie hoch die verfügbaren Vorspannungen sind, und diese Möglichkeiten sind je nach Ausführungsform alternativ oder kumulativ einsetzbar.

Die Lawinenphotodiodenelemente zumindest einer Gruppe sind bevorzugt fest mit einem jeweiligen Vorspannungsanschluss verbunden. Nochmals bevorzugt sind alle Gruppen fest mit einem Vorspannungsanschluss verbunden. Das führt zu einem einfacheren Design des Lichtempfängers, jedoch verringert sich zugleich die Variabilität. Eine Anpassung ist hier nur noch durch Herab- oder Heraufsetzen der Vorspannung an den Vorspannungsanschlüssen möglich.

Die Gruppen bilden vorzugsweise ein Schachbrettmuster, ein konzentrisches Muster oder mehrere lateral verschobene Bereiche. Das sind einige vorteilhafte Beispiele für eine Aufteilung in empfindlichere und unempfindlichere Bereiche, wobei die Muster je nach Ausführungsform durch feste Verdrahtung oder dynamisches Verschalten von passenden Gruppen auf eine jeweils gleiche Vorspannung entstehen. Das Muster definiert gemeinsam mit den zugehörigen Vorspannungsniveaus das Verhalten der elektronischen Blende, wobei Blendenmuster denkbar sind, die sich mit optischen Elementen schwer oder gar nicht realisieren ließen. Ein Schachbrettmuster steht hier stellvertretend für ein Muster, bei dem lokal alternierend sowohl empfindlichere als auch unempfindlichere Lawinenphotodiodenelemente verfügbar sind. Damit kann eine Messung mit viel und wenig Signal gleichzeitig erfolgen, ohne Zeitverlust, der bei einem Herkömmlichen Durchfahren der Empfindlichkeit (Sweep / Step) entstünde. Ein konzentrisches Muster ist beispielsweise für einen Lichtfleck geeignet, dessen Größe abstandsabhängig ist, oder der bei relativer Objektbewegung in und außer Fokus kommt. Ein Beispiel für eine laterale Verschiebung ist die unvermeidliche Verschiebung bei einem biaxialen Sende- und Empfangspfad, die bei Triangulationsverfahren sogar der gewünschte Messeffekt ist. Weiter denkbar ist, mehrere Bereiche für mehrere Messkanäle zu nutzen, etwa einen Mess- und einen Referenzkanal oder Bereiche für mehrere Sender mit unterschiedlichen Eigenschaften, insbesondere Wellenlängen.

Mindestens ein Vorspannungsanschluss stellt bevorzugt eine Vorspannung oberhalb und ein Vorspannungsanschluss eine Vorspannung unterhalb der Durchbruchspannung bereit. So kann der Geiger-Modus wahlweise an- und abgeschaltet werden. Das ist praktisch gleichbedeutend mit einem An- und Abschalten des Lichtempfangs, da der Verstärkungsfaktor im Geiger-Modus in der Größenordnung von 10⁶ liegt.

Die Vorspannungsanschlüsse stellen bevorzugt unterschiedliche Überspannungen oberhalb der Durchbruchspannung bereit. Mit der Überspannung hängen die Verstärkung und die Auslösewahrscheinlichkeit der Lawinenphotodiodenelemente zusammen. Somit kann eine elektronische Blendenwirkung nicht nur binär im Sinne einer Abschaltung erzielt werden, wenn die Vorspannung unterhalb der Durchbruchspannung liegt, sondern es wird eine graduelle Schwächung entsprechend einer nur dämpfenden Blende mit Zwischenstufen möglich. Vorzugsweise stehen an den Vorspannungsanschlüssen in einer Mischform zumindest eine Vorspannung unterhalb der Durchbruchspannung und mehreren unterschiedliche Überspannungen zur Verfügung.

Der Lichtempfänger weist bevorzugt mehrere Vorspannungsanschlüsse mit unterschiedlichem positivem Potential und mehrere Vorspannungsanschlüsse mit unterschiedlichem negativem Potential auf, um Lawinenphotodiodenelemente durch Verbinden von beiden Seiten mit einem positiven Potential und einem negativen Potential mit unterschiedlichen Vorspannungen zu versorgen. Dadurch entstehen mehr unterschiedliche Vorspannungen durch Kombinationen unterschiedlicher positiver und negativer Potentiale. Durch die doppelte Ansteuerung der Lawinenphotodiodenelemente von beiden Seiten kann die Anzahl der notwendigen Verbindungsleitungen bei sehr hoher Flexibilität deutlich reduziert werden. Die Begriffe positiv und negativ sind wie bei Potentialen üblich relativ. Hier ist der Bezugspunkt die Situation, dass wie in zahlreichen anderen Ausführungsbeispielen die Lawinenphotodiodenelemente nur von einer Seite mit unterschiedlichen Potentialen versorgt werden und damit die Vorspannung gegen Masse definiert ist. Demgegenüber ist dann das hier eingeführte zusätzliche variable Potential an der gegenüberliegenden Seite negativ.

Die Gruppen bilden bevorzugt eine Matrixanordnung, und die Vorspannungsanschlüsse mit positivem Potential sind jeweils mit einer Zeile oder Spalte und entsprechend die Vorspannungsanschlüsse mit negativem Potential jeweils mit einer Spalte oder Zeile verbunden. So entsteht eine Art überkreuzte Ansteuerung von Lawinenphotodiodenelementen von beiden Seiten. In einer Matrixanordnung können sehr viele Gruppen vorhanden sein, wobei jede Gruppe ein Pixel der Matrix bildet. Jedes solche Pixel kann nun individuell durch Zeilen- und Spaltenansteuerung mit einer unterschiedlichen Vorspannung versorgt werden. Insbesondere wird dadurch ermöglicht, gezielt nur eine Gruppe oder bestimmte Bereiche der Matrix oberhalb der Durchbruchspannung zu betreiben. Damit kann ohne besondere Anforderungen an die Auslesung des Lichtempfängers ein Detektionsereignis auf der Matrix lokalisiert werden.

Der Lichtempfänger weist bevorzugt mindestens ein Temperaturerfassungselement zur Erfassung einer Betriebstemperatur der Lawinenphotodiodenelemente und eine Temperaturkompensationseinheit auf, welche die Vorspannungen in Abhängigkeit von der gemessenen Temperatur anpasst. Die Durchbruchspannung unterliegt einer Temperaturabhängigkeit, die in der Größenordnung von 20-30 mV/K liegt und daher über einen üblichen Temperaturbereich sehr spürbare Auswirkungen auf die effektive Auswirkung einer angelegten Vorspannung hat. Für eine Kompensation bestimmt das Temperaturerfassungselement die Betriebstemperatur, wobei die Messung nicht notwendig in einer üblichen Einheit wie °C oder K erfolgt, sondern beispielsweise auch eine temperaturabhängige Rohinformation wie eine Spannung oder ein Strom in dem Temperaturerfassungselement sein kann. Eine Temperaturkompensationseinheit passt die Vorspannungen dann entsprechend der Messinformation des Temperaturerfassungselements an. Diese zusätzliche Modifikation der Vorspannungen ist mit äußerst wenig Aufwand möglich und sorgt dann dafür, dass Schwankungen über die Betriebstemperatur ausgeglichen sind.

Das Temperaturerfassungselement ist bevorzugt auf dem Lichtempfänger integriert und entsteht insbesondere im selben Halbleiterprozess mit den Lawinenphotodiodenelementen. Das ergibt eine sehr kompakte und genaue Temperaturkompensation. Nochmals bevorzugt umfasst das Temperaturerfassungselement mindestens eines der Lawinenphotodiodenelemente. Damit wird direkt dieselbe Temperaturabhängigkeit für die Bestimmung der Betriebstemperatur genutzt, die dann kompensiert wird. Ein Lawinenphotodiodenelement, das die Temperatur misst, ist vorzugsweise blind, was zumindest bedeutet, dass dessen Signal nicht zum Nutzsignal des Lichtempfängers beiträgt und auch bedeuten kann, dass ein solches Lawinenphotodiodenelement optisch abgeschirmt und möglicherweise auch elektrisch isoliert wird. Ansonsten könnte die eigene Aktivität die Temperaturmessung verfälschen.

Die Temperaturkompensationseinheit wirkt bevorzugt auf das mindestens eine Spannungsanpassungselement. Im Zuge der Bereitstellung von verschiedenen Vorspannungen wird dort also eine weitere, temperaturabhängige Spannungsdifferenz berücksichtigt. Alternativ ist denkbar, mindestens ein zusätzliches spannungsänderndes, vorzugsweise abziehendes Element für die temperaturabhängige Spannungsdifferenz vorzusehen. Die Temperaturkompensationseinheit passt vorzugsweise alle Vorspannungen zugleich an einem gemeinsam wirkenden Pfad an. In diesem Fall genügt ein Element, um alle Vorspannungen in Abhängigkeit von der Temperatur zu kompensieren. Dazu kann die Temperaturkompensationseinheit insbesondere gegenüber der Spannungsanpassung für die unterschiedlichen Vorspannungen angeordnet werden.

Der Lichtempfänger weist bevorzugt eine aktive Strombegrenzungseinheit auf, die bei Überschreiten einer Stromschwelle des in dem Lichtempfänger fließenden Stroms die Vorspannungen absenkt. Zu Anordnung und Wirkung der Strombegrenzungseinheit gelten die Erläuterungen und Ausgestaltungsmöglichkeiten wie bei der Temperaturkompensation analog. Insbesondere kann die Strombegrenzungseinheit vorzugsweise alle Vorspannungen zugleich an einem gemeinsam wirkenden Pfad absenken. Die Strombegrenzung ist vorzugsweise in den Lichtempfänger integriert, schützt ihn vor Beschädigung und sorgt auch während des strombegrenzten Betriebs für einen sinnvollen Arbeitspunkt. Dabei fungiert die Temperaturkompensationseinheit vorzugsweise zugleich als Strombegrenzungseinheit. Denn der in dem Lichtempfänger fließende Strom hängt von der Vorspannung ab. Somit sind ohnehin schon Mittel vorhanden, um den Strom zu begrenzen. Durch ihre Doppelfunktion fällt dafür praktisch kein zusätzlicher Aufwand an. Die Stromschwelle kann auch noch an die Betriebstemperatur angepasst werden, denn bei geringerer Betriebstemperatur hält der Lichtempfänger größere Ströme aus, ohne beschädigt oder durch zu viel Aktivität mit darauffolgenden Totzeiten der Lawinenphotodiodenelemente unzuverlässig zu werden. Da die Temperaturkompensationseinheit ohnehin Zugriff auf die Betriebstemperatur hat, kann sie dies sehr einfach berücksichtigen und die Stromschwelle, ab welcher die Vorspannung zur Begrenzung des Stroms abgesenkt werden muss, daran anpassen.

In vorteilhafter Weiterbildung ist ein optoelektronischer Sensor mit mindestens einem erfindungsgemäßen Lichtempfänger vorgesehen, wobei der Sensor zur Entfernungsmessung nach einem Lichtlaufzeitverfahren und/oder als Codeleser und/oder zur Datenübertragung ausgebildet ist. Die Entfernung kann durch Triangulation bestimmt werden, wie in einem Triangulationstaster oder einer Stereokamera. Vorzugsweise erfolgt die Entfernungsmessung nach einem Lichtlaufzeitverfahren. In einem Pulslaufzeitverfahren wird mit einem Lichtsender ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Das Lichtlaufzeitverfahren kann in einem eindimensionalen Entfernungstaster, einem Laserscanner oder einem Bildsensor einer 3D-Kamera nach dem Lichtlaufzeitprinzip genutzt werden. Weitere nicht abschließende Anwendungen des Lichtempfängers in einem optoelektronischen Sensor sind Codelesen oder Datenübertragung oder Kombinationen dieser Anwendungen in einem Sensor.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einem Lichtempfänger mit einer Vielzahl von Lawinenphotodiodenelementen im Geiger-Modus;
- Fig. 2: ein vereinfachtes Blockschaltbild eines Lawinenphotodiodenelements im Geiger-Modus;
- Fig. 3: ein schematisches Schaltbild eines Lichtempfängers mit Versorgung von Lawinenphotodiodenelementen mit unterschiedlichen Vorspannungen durch Umschalten;
- Fig. 4: ein schematisches Schaltbild eines Lichtempfängers mit Versorgung von Lawinenphotodiodenelementen mit unterschiedlichen Vorspannungen durch Spannungsabzug;
- Fig. 5: ein schematisches Schaltbild eines Lichtempfängers mit Versorgung von Lawinenphotodiodenelementen mit unterschiedlichen Vorspannungen durch Umschalten und Spannungsabzug;
- Fig. 6: ein schematisches Schaltbild eines Lichtempfängers, dessen Lawinenphotodiodenelemente von beiden Seiten mit unterschiedlichem positivem beziehungsweise negativem Potential versorgt werden;
- Fig. 7: ein schematisches Schaltbild ähnlich Figur 6, jedoch mit vertauschter Zeilen- und Spaltenansteuerung;
- Fig. 8: ein Blockschaltbild eines Lichtempfängers mit Temperaturkompensation der Vorspannung; und
- Fig. 9: ein beispielhaftes Kennlinienbild der Spannungskompensation in Abhängigkeit von Strom und Temperatur.

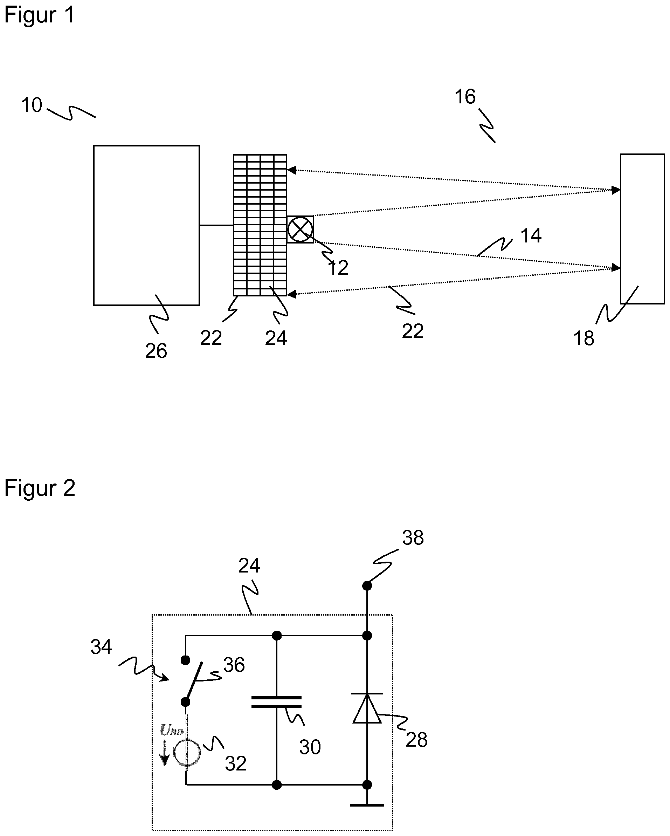

Figur 1 zeigt eine schematische Darstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal 14 in einen Überwachungsbereich 16 aus. Trifft es dort auf ein Objekt 18, so wird ein Teil des Lichtsignals remittiert oder reflektiert und kehrt als remittiertes Lichtsignal 20 zu einem Lichtempfänger 22 zurück. Dieser Lichtempfänger 22 umfasst eine Vielzahl von Lawinenphotodiodenelementen 24 im Geiger-Modus oder SPADs. Die Empfangssignale der Lawinenphotodiodenelemente 24 werden von einer Steuer- und Auswertungseinheit 26 ausgelesen und dort ausgewertet.

Der Sensor 10 weist in einer praktischen Ausführungsform weitere Elemente auf, insbesondere Sende- und Empfangsoptiken und Anschlüsse, auf die hier vereinfachend nicht eingegangen wird. Die Auftrennung in Lichtempfänger 22 und Steuer- und Auswertungseinheit 26 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente 24 und einzelnen oder Gruppen von Lawinenphotodiodenelementen 24 zugeordnete Schaltkreise zu deren Auswertung und Ansteuerung teilen. Außerdem ist die optische Anordnung mit einem Lichtsender 12, der einen kleinen Anteil des Lichtempfängers 22 verdeckt, rein beispielhaft. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Der Sensor 10 ist vorzugsweise entfernungsmessend. Dazu bestimmt die Steuer- und Auswertungseinheit 26 eine Lichtlaufzeit vom Aussenden des Lichtsignals 14 bis zum Empfang des remittierten Lichtsignals 20 und rechnet dies über die Lichtgeschwindigkeit in einen Abstand um.

Der dargestellte einstrahlige Sensor 10 ist nur als Beispiel zu verstehen. Eine Erweiterung des Überwachungsbereichs 16 ist durch Bewegen des Strahls in einem Laserscanner möglich, sei es durch einen Drehspiegel oder einen insgesamt drehenden Messkopf mit Lichtsender 12 und/oder Lichtempfänger 22. So können mehrere einstrahlige Systeme kombiniert werden, um ein Lichtgitter mit mehreren, meist parallelen Strahlen zu bilden, welches insbesondere als tastendes Lichtgitter in jedem Strahl Entfernungen misst oder überwacht. Es kann mit den Lawinenphotodiodenelementen 24 einzeln oder gruppenweise ortsaufgelöst gemessen werden, so dass eine 3D-Kamera entsteht. Auch mobile Systeme sind denkbar, bei denen der Sensor 10 beweglich montiert ist.

Figur 2 zeigt ein beispielhaftes vereinfachtes Ersatzschaltbild eines einzelnen Lawinenphotodiodenelements 24 im Geiger-Modus. In der Praxis handelt es sich um ein Halbleiterbauteil, dessen nicht dargestellter Aufbau hier als bekannt vorausgesetzt wird. Das Lawinenphotodiodenelement 24 zeigt zum einen das Verhalten einer Diode 28. Sie hat eine Kapazität, die durch einen parallel geschalteten Kondensator 30 repräsentiert wird. Der mögliche Lawinendurchbruch erzeugt Ladungsträger, deren Ursprung in dem Ersatzschaltbild als Spannungsquelle 32 dargestellt wird. Der Lawinendurchbruch wird durch ein auftreffendes Photon 34 ausgelöst, wobei dieser Vorgang wie ein Schalter 36 wirkt. Es gibt dann verschiedene Möglichkeiten, das Ausgangssignal 38 zu betrachten, auf die hier nicht näher eingegangen wird.

Im Bereitschaftszustand liegt über der Diode 28 eine Spannung oberhalb der Durchbruchspannung an. Erzeugt dann ein einfallendes Photon 34 ein Ladungsträgerpaar, so schließt dies gleichsam den Schalter 36, so dass das Lawinenphotodiodenelement 24 über die Spannungsquelle 32 mit Ladungsträgern geflutet wird. Neue Ladungsträger entstehen aber nur, solange das elektrische Feld stark genug bleibt. Wird durch die Spannungsquelle 32 der Kondensator 30 so weit entladen, dass die Durchbruchspannung unterschritten ist, so kommt die Lawine von selbst zum Erliegen ("passive quenching"). Danach lädt sich der Kondensator 30 wieder auf, bis wieder eine Spannung über der Durchbruchspannung an der Diode 28 anliegt. Es gibt alternative Ausgestaltungen, in denen die Lawine von außen erkannt und daraufhin eine Entladung unter die Durchbruchspannung ausgelöst wird ("active quenching"). Ein Lawinenphotodiodenelement 24 hat somit die Fähigkeit, sogar einzelne Photonen zu detektieren, und eignet sich daher für einen hochempfindlichen Lichtempfänger 22.

Je weiter die Vorspannung oberhalb der Durchbruchspannung liegt, umso stärker wird die Lawine, weil auf dem Kondensator 30 mehr Ladung verfügbar ist, ehe die Spannung unter die Durchbruchspannung fällt und die Lawine damit erlischt. Die Vorspannung beeinflusst demnach die Verstärkung. Änderungen der Vorspannung wirken sich außerdem auf den Quantenwirkungsgrad des Lawinenphotodiodenelements 24 aus, weil die Größe der sich ausbildenden Driftzone ebenfalls von der Höhe der Vorspannung abhängt. Das bedeutet, dass die Wahrscheinlichkeit einer Lawinenauslösung durch ein Einzelphoton 34 mit der Vorspannung steigt. Die Vorspannung oder eine die Durchbruchspannung übersteigende Überspannung ist daher ein Parameter, über den die Empfindlichkeit des Lawinenphotodiodenelements 24 eingestellt werden kann. Durch Absenken der Vorspannung unter die Durchbruchspannung kann das Lawinenphotodiodenelement 24 praktisch deaktiviert werden, da der hohe Verstärkungsfaktor von 10⁶ und mehr im Geiger-Modus entfällt.

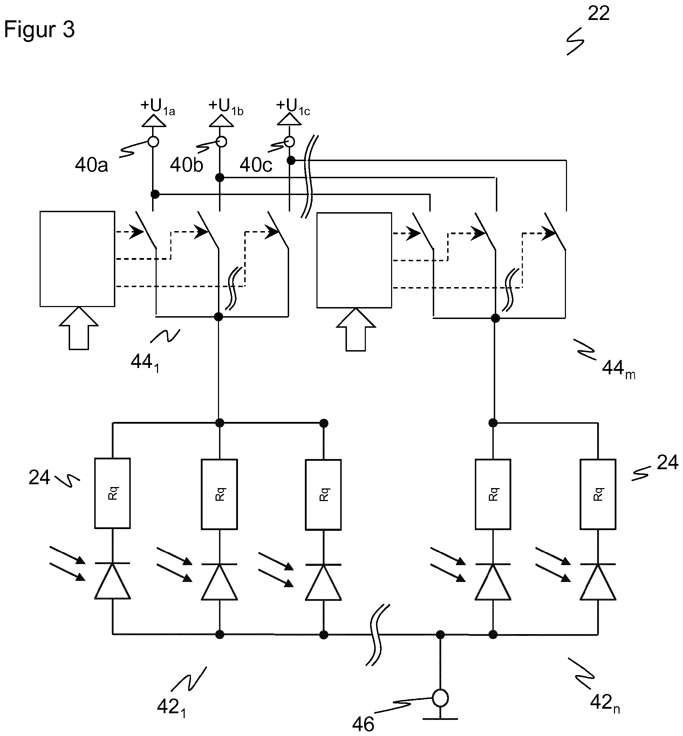

Figur 3 zeigt ein schematisches Schaltbild des Lichtempfängers 22, dessen Lawinenphotodiodenelemente 24 über mehrere Vorspannungsanschlüsse 40a-c unterschiedlich stark vorgespannt und dementsprechend empfindlich eingestellt werden können. Die Lawinenphotodiodenelemente 24 sind jeweils vereinfachend als Reihenschaltung einer Diode und eines Löschwiderstands dargestellt. Sie sind gruppenweise zusammengefasst, wobei hier nur zwei Gruppen 42₁-42ₙ gezeigt sind, obwohl in der Praxis auch eine große Anzahl von Gruppen vorhanden sein kann, bis hin zu dem Grenzfall, in dem schon einzelne Lawinenphotodiodenelemente 24 eine Gruppe bilden. Hier sind Schaltungsaufwand und Flexibilität gegeneinander abzuwägen. Die konkrete Ausgestaltung der Lawinenphotodiodenelemente 24 ist rein beispielhaft und jede bekannte Implementierung von SPADs denkbar, insbesondere mit aktiver Löschung beziehungsweise einem dritten kapazitiv gekoppelten Anschluss zum Auslesen des Geigerstroms entsprechend der einleitend genannten WO 2011/117309 A2. Der Signalabgriff ist aber nicht Gegenstand dieser Beschreibung. Es soll nur erwähnt werden, dass es vorteilhaft sein kann, das Signal mehrerer Lawinenphotodiodenelemente 24 beispielsweise jeweils einer Gruppe 42₁-42ₙ zusammenzufassen, damit singuläre Ereignisse in einzelnen Lawinenphotodiodenelemente 24 durch Statistik ausgeglichen werden.

Die Vorspannungsanschlüsse 40a-c sind ein Teil einer Schaltung, die es ermöglicht, die Gruppen 42₁-42ₙ mit unterschiedlichen Vorspannungen zu beaufschlagen beziehungsweise zu versorgen. Die konkrete Wahl, mit welchem der Vorspannungsanschlüsse 40 eine Gruppe 42₁-42ₙ verbunden ist, wird in dieser Ausführungsform in einem jeweiligen 1-aus-n-Decoder oder Umschaltelement 44₁-44ₘ getroffen. Dadurch wird jeweils eine der Vorspannungen von den Vorspannungsanschlüssen 40a-c auf die Lawinenphotodiodenelemente 24 einer Gruppe 42₁-42ₙ durchgeschaltet. Ein einfacher Mehrfachschalter als Umschaltelement 44₁-44ₘ ist rein beispielhaft und etwa auch eine binär- oder 2n-codierte Spannungsauswahl zur Reduzierung der Steuerbitanzahl zum Einstellen des jeweiligen Schalterelement-Zustandes denkbar. Die entsprechenden Auswahlbits können in Speicherzellen des Lichtempfängers 22 abgelegt werden, wobei dann in der maximalen Ausbaustufe mit Gruppen 42₁-42ₙ, die jeweils nur ein Lawinenphotodiodenelement 24 enthalten, individuelle Speicherregister pro Lawinenphotodiodenelement 24 vorhanden sind, wo die jeweilige zu verwendende Vorspannung abgelegt ist.

Die dargestellte Anzahl von Vorspannungsanschlüssen 40a-c und damit verfügbaren unterschiedlichen Vorspannungen ist ebenso beispielhaft wie die Anzahl der Gruppen 42₁-42ₙ und ergibt sich aus den konkreten Anforderungen für die Anwendung des Lichtempfängers 22. In der Regel wird die Anzahl aber überschaubar bleiben und in einer Größenordnung unter zehn bleiben, um den Schaltungsaufwand zu begrenzen und weil eine zu feine Abstufung der Empfindlichkeit nur noch vergleichsweise geringe Vorteile bietet, zumal ein Lawinenphotodiodenelement 24 auch bei fester Vorspannung zumindest mit einem gewissen Dynamikbereich des Empfangslichts selbst umgehen kann.

Die unterschiedlichen Vorspannungen wirken wie eine elektronische Blende, mit der bestimmte Gruppen 42₁-42ₙ abgeschaltet oder unempfindlicher eingestellt werden können. Wie schon erwähnt, verändert die Vorspannung die Verstärkung und insbesondere bei rot-empfindlichen Lawinenphotodiodenelementen 24 auch den Quantenwirkungsgrad und damit die Auslösewahrscheinlichkeit. Folglich kann über die unterschiedlichen Vorspannungen eine gewünschte inhomogene Empfindlichkeitsverteilung des Lichtempfängers 22 eingestellt werden. Dabei führt eine Vorspannung unterhalb der Durchbruchspannung praktisch zu einem Abschalten im ungleich weniger empfindlichen APD-Modus oder bei weiterem Absenken der Vorspannung bis hin zu Null sogar im PIN-Modus.

Eine Variation der Überspannung oberhalb der Durchbruchspannung bedeutet eine graduelle Änderung der Empfindlichkeit, d.h. zum Erhalt ähnlich hoher Signalwerte muss mehr Lichtleistung aufgebracht werden. Ab einer gewissen Lichtleistung stellt sich ein signalseitiger Sättigungseffekt ein, der einen Informationsverlust und ein schlechteres Signal-Rauschverhältnis durch Hintergrundeffekte (Dark Counts) mit sich bringt. Dies kann durch überlappende oder nicht überlappende unterschiedliche Empfindlichkeiten anderer Lawinenphotodiodenelemente 24 mittels unterschiedlicher Vorspannungen ausgeglichen werden.

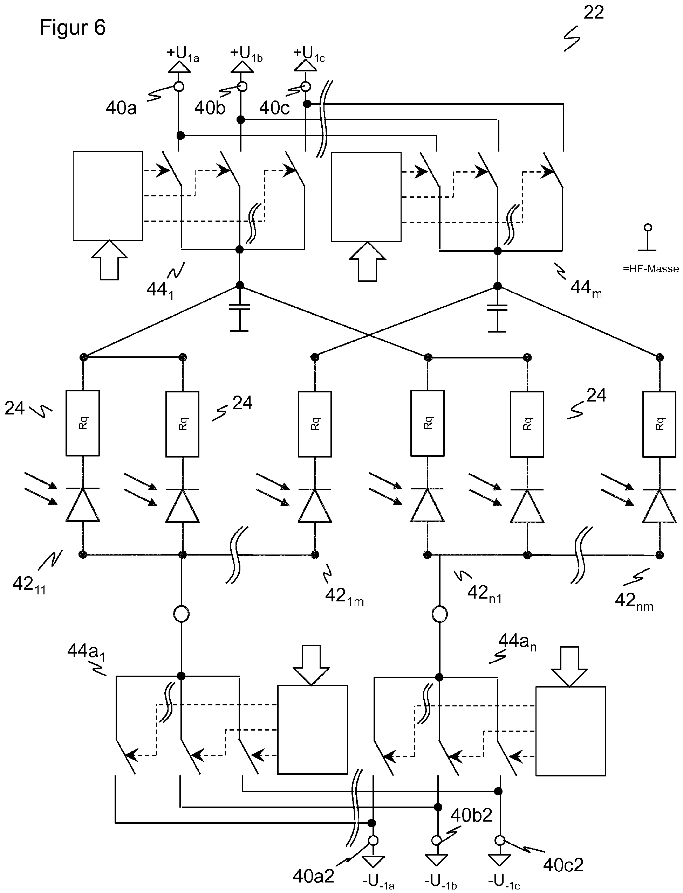

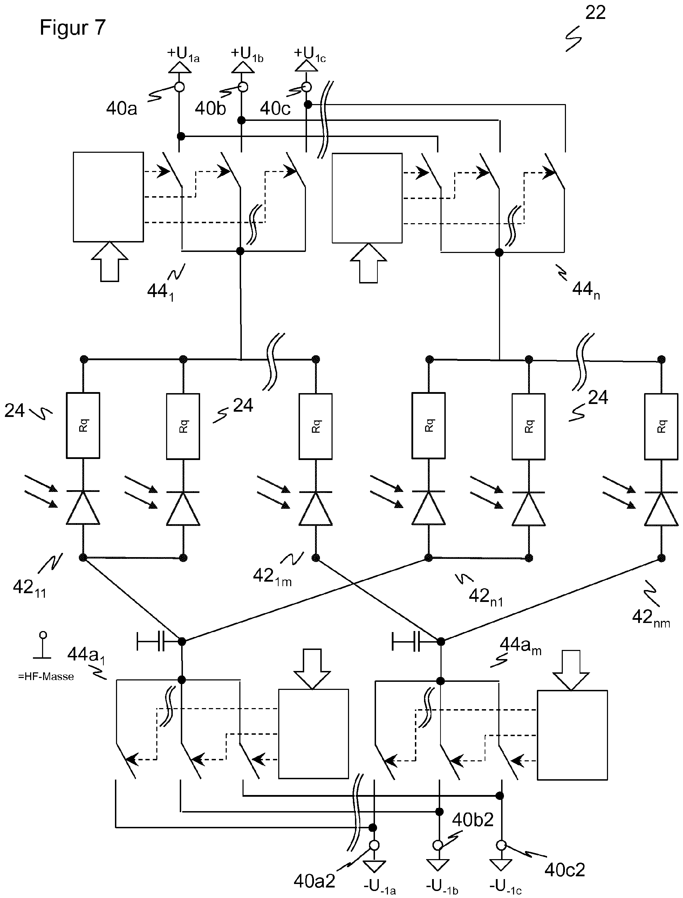

In Figur 3 werden die Lawinenphotodioden 24 von einer Seite, hier der Kathode, mit den unterschiedlichen Vorspannungsanschlüssen 40a-c verbunden. Auf der anderen Seite, hier der Anode, ist ein gemeinsamer Anschluss 46 mit einem festen Potential vorgesehen. Diese Anordnung kann auch gespiegelt werden, wobei dann die unterschiedlichen Vorspannungen anodenseitig zur Verfügung stehen. In später anhand der Figuren 6 und 7 erläuterten Ausführungsformen sind sowohl anoden- als auch kathodenseitig mehrere zur Auswahl stehende Potentiale zum Einstellen von unterschiedlichen Vorspannungen vorgesehen.

In einer nicht gezeigten alternativen Ausführungsform sind keine Umschaltelemente 44₁-44ₘ vorgesehen, sondern die Gruppen 42₁-42ₙ fest auf einen der Vorspannungsanschlüsse 40a-c verschaltet. In diesem Fall gibt es effektiv nur so viele Gruppen 42₁-42ₙ wie Vorspannungsanschlüsse 40a-c, da die Zuordnung zu einer Vorspannung nicht variiert werden kann, folglich nur eine Größenordnung von zwei bis fünf, jedenfalls vorzugsweise höchstens zehn Gruppen. Die geometrische Anordnung ist per Design vorgegeben.

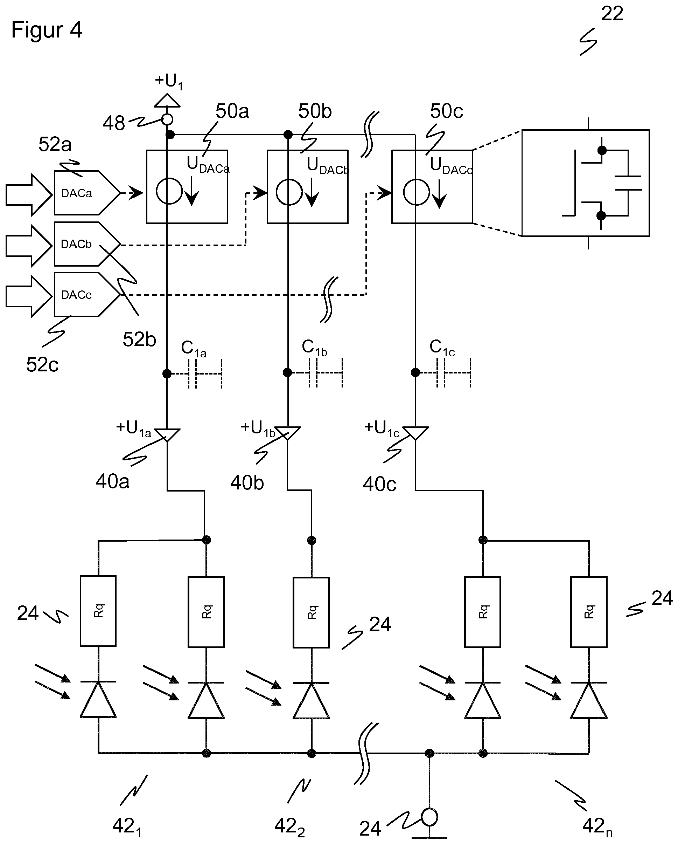

Figur 4 zeigt ein schematisches Schaltbild für eine weitere Ausführungsform zur Versorgung von Lawinenphotodiodenelementen 24 mit unterschiedlichen Vorspannungen. Auch wenn die Anzahl verschiedener Vorspannungsanschlüsse 40a-c in der Praxis begrenzt ist, bedeutet es doch einen spürbaren Schaltungsaufwand, die Vorspannungen extern bereitzustellen. Deshalb ist in Figur 4 nur noch ein einziger Anschluss 48 für eine externe Spannung vorgesehen.

Spannungsanpassungselemente 50a-c erzeugen aus der einen externen Spannung die benötigten unterschiedlichen Vorspannungen und stellen sie an den nun internen Vorspannungsanschlüssen 40a-c bereit. Vorzugsweise arbeiten die Spannungsanpassungselemente 50a-c spannungsabziehend, beispielsweise ähnlich der Funktionsweise eines Linearreglers. Dann sollte die externe Spannung einem Maximalwert für eine benötigte Vorspannung entsprechen, um genügend Reserve vorzuhalten. Prinzipiell ist aber auch denkbar, eine Spannung hinzuzufügen, etwa in Form einer Ladungspumpe.

Die Spannungsanpassungselemente 50a-c weisen eine Ansteuerung hier in Form chipinterner DA-Wandler 52a-c auf. Dadurch ist eine Vorgabe der Vorspannungen an den internen Vorspannungsanschlüssen 50a-c einstellbar, wobei die Spannungsgradierung über die Bitauflösung der DA-Wandler 52a-c und eine linear oder nichtlinear abgeleitete Differenzspannung vorgegeben ist. So lässt sich über die resultierende Vorspannung festlegen, mit welcher Empfindlichkeit die Gruppen 42₁-42ₙ je nach Überspannung arbeiten beziehungsweise ob sie mittels Vorspannung unterhalb der Durchbruchspannung praktisch abgeschaltet sind. Der Lichtempfänger 22 kann Speicherbereiche aufweisen, um dort die Ansteuerungen abzulegen. Alternativ zu einer digitalen Ansteuerung mittels der DA-Wandler 52a-c ist auch eine analoge Beeinflussung etwa durch einen Steuerstrom, eine Steuerspannung oder eine Widerstandsbeschaltung denkbar. Die gestrichelt eingezeichneten Kondensatoren C1a-C1c können zur niederimpedanten Versorgung der Lawinenphotodiodenelemente 24 erforderlich sein, insbesondere wenn die rechts oben skizzierten, meist parasitären Parallelkapazitäten der Spannungsanpassungselemente 50a-c dafür nicht ausreichen.

Figur 4 zeigt als Beispiel drei Gruppen 42₁-42ₙ von Lawinenphotodioden 24. Da die Verbindung zu den internen Vorspannungsanschlüssen 40a-c fest ist, kann es hier vorteilhaft sein, auch nicht mehr Gruppen 42₁-42ₙ als Vorspannungsanschlüsse 40a-c zu bilden. Andererseits können durchaus zusätzliche Gruppen vorhanden sein, die sich dann in anderen Eigenschaften unterscheiden, obwohl mehrere Gruppen fest mit demselben Vorspannungsanschluss 40a-c verbunden sind.

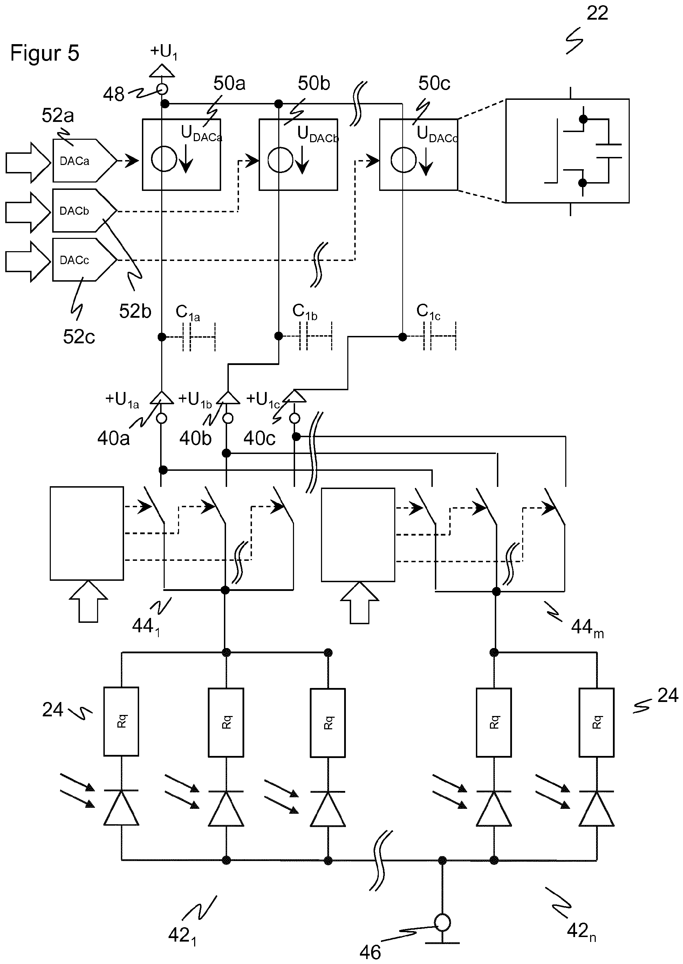

Figur 5 zeigt ein Schaltbild für eine weitere Ausführungsform zur Versorgung von Lawinenphotodiodenelementen 24 mit unterschiedlichen Vorspannungen. Dabei handelt es sich praktisch um eine Kombination der Maßnahmen, die unter Bezugnahme auf die Figuren 3 und 4 erläutert wurden. Es werden also zum einen aus einer externen Spannung an einem Anschluss 48 mittels Spannungsanpassungselementen 50a-c mehrere Vorspannungen erzeugt und an internen Vorspannungsanschlüssen 40a-c bereitgestellt. Außerdem sind Umschaltelemente 44₁-44ₘ vorgesehen, um die Gruppen 42₁-42ₙ wahlweise mit einem der Vorspannungsanschlüsse 40a-c zu verbinden.

Die in den Figuren 3 bis 5 gezeigten Schaltungselemente sind rein beispielhaft zu verstehen, und Varianten, die zu einer Figur erwähnt sind, können auch in den übrigen Ausführungsformen eingesetzt werden. Die tatsächliche Realisierung der Schaltungselemente ist nicht festgelegt und beispielsweise von dem Halbleiterprozess abhängig, in dem der Lichtempfänger 22 entsteht. Wie bereits erwähnt, können die verschiedenen Vorspannungen auch kathoden- statt wie dargestellt anodenseitig bereitgestellt werden. Die Spannungs- und Bezugspotentiale können verschoben oder umgekehrt werden.

Figur 6 zeigt ein schematisches Schaltbild einer weiteren Ausführungsform des Lichtempfängers 22, bei dem die Lawinenphotodiodenelemente 24 von beiden Seiten mit unterschiedlichem positivem beziehungsweise negativem Potential versorgt werden. Die Anordnung unterscheidet sich von derjenigen nach Figur 3 vor allem durch einen zweiten Block mit Versorgungsanschlüssen 40a2-c2 und Umschaltelementen 44a₁-44aₙ, um die Lawinenphotodiodenelemente 24 doppelt, nämlich von oben und von unten beziehungsweise anoden- und kathodenseitig, mit unterschiedlichen Potentialen anzusteuern. Figur 6 zeigt jeweils drei positive Potentiale +U₁ₐ...+U_{1c} und drei negative Potentiale -U₋₁ₐ...-U_{-1c}. Die Potentiale sind aber frei wählbar, also weder auf eine Negation bei gleichem Betrag festgelegt, noch muss überhaupt die Anzahl verschiedener Potentiale an beiden Seiten gleich sein.

Die Lawinenphotodiodenelemente 24 sind in diesem Ausführungsbeispiel zu einer nm-Matrix angeordnet, bei denen die Gruppen 42₁₁-42ₙₘ als Pixel des Lichtempfängers 22 angesehen werden können. Für diese Anordnung ist die doppelte Ansteuerung besonders vorteilhaft, aber eine doppelte Ansteuerung ist auch für beliebige andere Gruppeneinteilungen möglich. Dabei können gemeinsame Potentialanschlüsse auf den beiden Seiten variieren, wie sogleich für das Beispiel der Matrixanordnung beschrieben, oder auch zumindest teilweise gleichartig zugeordnet werden.

Entsprechend der Matrixanordnung ist in Figur 6 das jeweilige j-te der oberen Umschaltelemente 44₁-44ₘ mit jeweils einer Spalte von Gruppen 42₁ⱼ-42ₙⱼ und das jeweilige i-te der unteren Umschaltelemente 44a₁-44aₙ mit jeweils einer Zeile von Gruppen 42ᵢ₁-42ᵢₘ verbunden. Das ist auch umgekehrt möglich, d.h. eine Verbindung der oberen Umschaltelemente 44₁-44ₘ mit jeweils einer Zeile und der unteren Umschaltelemente 44a₁-44aₙ mit jeweils einer Spalte, und dies illustriert die Figur 7. Die Beschreibung erfolgt ohne Beschränkung der Allgemeinheit weiterhin anhand der Figur 6.

Die doppelte Ansteuerung erlaubt es, eine Spalte auf ein ausgewähltes positives Potential ++U₁ₐ...+U_{1c} und eine Zeile auf ein ausgewähltes negatives Potential U₋₁ₐ...-U_{-1c} zu legen. Im Ergebnis wird damit die Vorspannung einer einzelnen, frei selektierbaren Gruppe 42ᵢⱼ ausgewählt. Das ist sogar für mehrere bestimmte Pixel und damit wählbare Bereiche der Matrix gleichzeitig möglich, wobei hier wegen der gemeinsamen Spalten und Zeilen eine gewisse Abhängigkeit besteht.

Allgemein gesagt können durch die doppelte Ansteuerung sehr vielen Gruppen 42ₙ-42ₙₘ oder Pixeln gezielt mit einer Vorspannung versorgt werden, die wiederum durch die zahlreichen Kombinationsmöglichkeiten von positiven und negativen Potentialen sehr variabel ist. Konkret werden nachfolgend einige Beispiele für darauf basierende Betriebsmodi genannt.

In einem Betriebsmodus wird nur eine Gruppe 42ᵢⱼ oberhalb der Durchbruchspannung betrieben, um ein Detektionsereignis eindeutig zu lokalisieren. Beispielsweise unterscheidet sich hierbei die Spannung +U₁ₐ von +U_{1b} deutlich, ebenso die Spannung -U₋₁ₐ von -U_{-1b}. Nur wenn die maximale positive Spannung und die maximale negative Spannung an beiden Seiten eines Lawinenphotodiodenelements 24 anliegen, wird eine Vorspannung oberhalb der Durchbruchspannung erreicht.

In einem anderen Betriebsmodus folgen einige Gruppen 42₁₁-42ₙₘ einem tatsächlich bestimmten oder vermuteten Ort eines Empfangslichtflecks, es werden also nur die Gruppen 42₁₁-42ₙₘ unter dem Empfangslichtfleck oberhalb der Durchbruchspannung betrieben. Ein Spezialfall hiervon ist eine elektronische Justage, welche die aktiven, also oberhalb der Durchbruchspannung betriebenen Gruppen 42₁₁-42ₙₘ festlegt. Damit wird praktisch eine elektronische Blende an die tatsächlichen Gegebenheiten im Betrieb justiert.

Weiterhin ermöglicht die doppelte Ansteuerung, die Spannungsunterschiede bei einem Umschalten der in einem Lawinenphotodiodenelement 24 genutzten Versorgungsspannung zu verringern. Das ist vorteilhaft, weil die Umladungsprozesse mit größeren Spannungsunterschieden mehr Zeit beanspruchen und somit das Hochfrequenzverhalten beeinträchtigen. Die Aufteilung der variablen Vorspannung auf ein negatives und ein positives Potential erlaubt es beispielsweise, auf der einen Seite eines Lawinenphotodiodenelements 24 nur die Überspannung anzupassen, um die Verstärkung zu variieren. Dafür genügen kleine Spannungsunterschiede. Ein Schaltvorgang, also eine Änderung der Vorspannung über oder unter die Durchbruchspannung mit entsprechend größeren Spannungsunterschieden, erfolgt dann auf der anderen Seite.

Ausführungsformen mit doppelter Ansteuerung wurden anhand der Figuren 6 und 7 erläutert, die auf der Figur 3 basiert. Die Bereitstellung von positiven und negativen Potentialen wie in Figur 3 durch Umschaltelemente 44₁-44ₘ, 44a₁-44aₙ ist aber nur beispielhaft. Insbesondere können auch die unter Bezugnahme auf die Figuren 4 und 5 beschriebenen Ausführungsformen entsprechend modifiziert werden, um eine doppelte Ansteuerung zu erreichen, also beispielsweise durch feste Verbindung mit einer externen negativen Spannung oder durch Spannungsanpassungselemente, die intern mehrere unterschiedliche negative Potentiale aus einem externen Potential erzeugen.

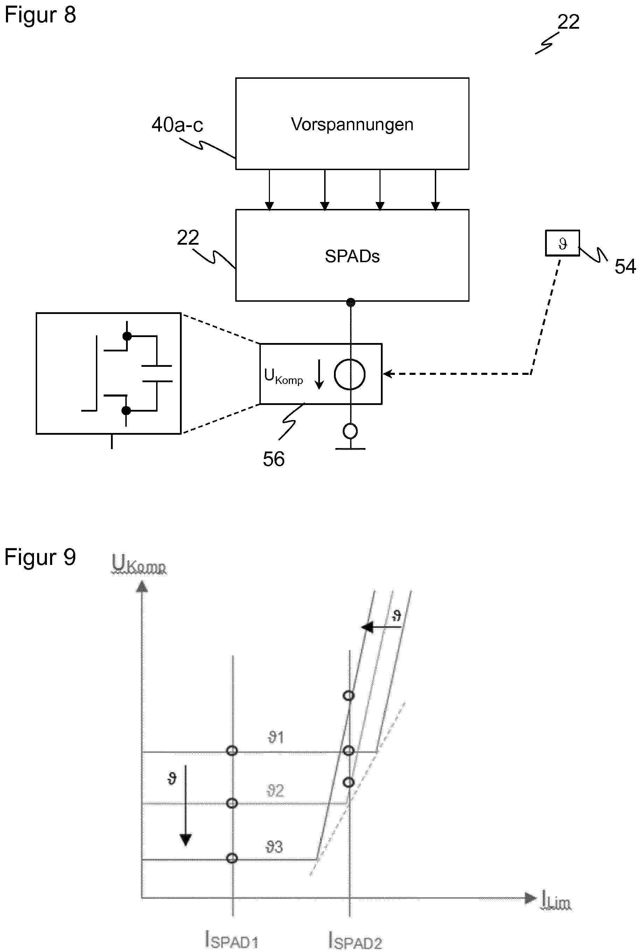

Figur 8 zeigt ein Blockschaltbild des Lichtempfängers 22 zur Erläuterung einer Temperaturkompensation. Dabei sind nur noch einfache Blöcke für die Lawinenphotodiodenelemente 24 und die Versorgungsanschlüsse 40a-c dargestellt. Dies steht stellvertretend für alle bisher beschriebenen Möglichkeiten, die Lawinenphotodiodenelemente 24 mit unterschiedlichen Vorspannungen zu versorgen. Figur 8 dient der Erläuterung der Integration einer Temperaturkompensation, wofür eine Temperaturmesseinheit 54 vorgesehen ist, welche die Temperatur des Lichtempfängers 22 bestimmt. Die davon gemessene Temperaturinformation wird in einer Temperaturkompensationseinheit 56 genutzt. Es erfolgt eine interne temperaturabhängige Spannungsanpassung, die von außen anliegenden Vorspannungen 40a-c können deshalb auch bei Temperaturänderungen konstant gehalten werden.

Die Temperaturmesseinheit 54 ist vorzugsweise in den Halbleiterprozess des Lichtempfängers 22 integriert. Als eigentlicher Fühler kommt beispielsweise ein PN-Übergang auf dem Chip des Lichtempfängers in Frage, dessen Temperaturkoeffizient bekannt ist, so dass Spannungsschwankungen an dem PN-Übergang anhand des Temperaturkoeffizienten der Lawinenphotodiodenelemente 24 dorthin übertragen werden können. Besonders vorteilhaft ist, eine oder mehrere der Lawinenphotodiodenelemente 24 selbst als Temperaturmesseinheit 54 zu nutzen, denn deren Temperaturverhalten ist von vorneherein das gleiche wie dasjenige der übrigen Lawinenphotodiodenelemente 24. Ein temperaturmessendes Lawinenphotodiodenelement 24 sollte vorzugsweise gezielt abgedunkelt werden, damit die Temperaturmessung nicht von der eigenen Aktivität bei Lichteinfall verfälscht wird.

Die Temperaturkompensationseinheit 56 setzt die temperaturabhängige Spannungsinformation der Temperaturmesseinheit 54 in eine Anpassung der jeweiligen Vorspannung um. Wird ein Lawinenphotodiodenelement 24 als Temperaturmesseinheit 54 genutzt, kann direkt deren Spannungswert übertragen werden. Alternativ sind aber auch erforderliche Modifikationen denkbar, wie eine Verstärkung, eine Invertierung und auch ein nichtlineares Verhalten. Dabei ist auch denkbar, dass die Temperaturmesseinheit 54 selbst noch keine Spannungsinformation liefert, sondern beispielsweise eine Temperatur in einer klassischen Einheit wie °C, K, die in der Temperaturkompensationseinheit 56 umgerechnet wird.

Die Temperaturkompensationseinheit 56 kann als spannungsabziehendes Element ausgebildet sein und arbeitet dann ganz analog den zu Figur 4 erläuterten Spannungsanpassungselementen 50a-c. Vorzugsweise ist die Temperaturkompensationseinheit 56 an einem gemeinsamen Pfad angeordnet und kompensiert so durch ihre zusätzliche temperaturabhängige Differenzspannung alle unterschiedlichen Vorspannungen. Prinzipiell können auch mehrere Temperaturkompensationseinheiten 56 für die jeweiligen Vorspannungen vorgesehen sein. Eine weitere Alternative ist, dass die erforderliche temperaturabhängige Differenzspannung zusätzlich in schon vorhandenen Spannungsanpassungselementen 50a-c bei der Erzeugung der unterschiedlichen Vorspannungen berücksichtigt wird.

Als eine Erweiterung kann die Temperaturmesseinheit 54 mehrere auf dem Lichtempfänger 22 verteilte Fühler aufweisen, um lokale Temperaturunterschiede zu berücksichtigen. Eine Variante mittelt dann die Temperaturen und bestimmt eine gemeinsame Spannungskompensation auf dieser Basis. Eine weitere Möglichkeit ist, verschiedene Gruppen 42₁-42ₙ durch eine mehrkanalige Temperaturkompensationseinheit 56 unterschiedlich entsprechend der lokalen Temperatur zu kompensieren.

Figur 9 zeigt ein Kennlinienbild der für die Temperaturkompensation erforderlichen Kompensationsspannung U_{Komp} in Abhängigkeit von Stromfluss und Temperatur, um mögliche Funktionsweisen der Temperaturkompensationseinheit 56 noch weiter zu erläutern. Das betrifft insbesondere eine zusätzlich denkbare Strombegrenzungsfunktion der Temperaturkompensationseinheit 56, die ebenfalls temperaturabhängig ausgelegt sein und dafür die vorhandene Temperaturmesseinheit 54 nutzen kann. Die Strombegrenzung kann prinzipiell auch unabhängig von der Temperaturkompensationseinheit 56 auf dem Lichtempfänger 22 integriert sein oder von außen erfolgen.

Die Strombegrenzung dient dem Schutz des Lichtempfängers 22 vor Überlast. Außerdem soll sie dafür sorgen, dass auch bei Strombegrenzung noch ein sinnvoller Arbeitspunkt gefunden wird. Die Aktivität der Lawinenphotodiodenelement 24 und damit der Stromfluss hängt von dem Lichteinfall und dem Dunkelrauschen ab, wobei letzteres mit der Temperatur zunimmt. Es ist in vielen Fällen nicht möglich, den maximalen Fremdlichteintrag opto-mechanisch zu begrenzen. Bei zu viel Lichteinfall beziehungsweise hoher Betriebstemperatur kommt es somit zu einer positiven Rückkopplung, weil die zunehmende Verlustleistung das Dunkelrauschen noch verstärkt. Dann besteht die Gefahr der Zerstörung des Bauteils.

Außerdem steht bei zu viel Aktivität besonders der an sich nicht zu erfassenden Fremdlicht- oder Dunkelrauschereignisse ein Großteil der Lawinenphotodiodenelemente 24 wegen der Totzeiten für die eigentliche Detektion nicht zur Verfügung. Eine Strombegrenzung durch Zurückfahren der Vorspannung beziehungsweise Überspannung stellt dann sicher, dass noch genügend Lawinenphotodiodenelemente 24 verfügbar bleiben. Die Strombegrenzung verbessert deshalb auch das Signal-RauschVerhältnis. Das funktioniert auch bei einer geringen Anzahl von Lawinenphotodiodenelemente 24 pro Fläche unter Fremdlicht, die in der Regel einen besseren Füllfaktor und somit eine höhere Detektivität in Grenzpegelbereich aufweisen.

In dem Kennlinienbild der Figur 9 entsprechen der linke Bereich der bereits erläuterten Temperaturkompensation der Vorspannung und der rechte Bereich der Strombegrenzung oder Verlustleistungsbegrenzung. Den Übergang zwischen diesen Modi bildet jeweils eine Knickstelle mit temperaturabhängiger Lage. Das Kennlinienbild soll lediglich die prinzipielle Arbeitsweise und das Zusammenspiel von Temperaturkompensation und Strombegrenzung illustrieren. Die konkreten Kennlinienneigungen sowie die Lage der temperaturabhängigen Knick- oder Übergangsstellen sind nur beispielhaft. Insbesondere können die gewünschten Strombegrenzungswerte auch variabel sein, sei es durch externe Komponenten wie einen Widerstand oder auf digitale Weise etwa über ein Parameterregister des Lichtempfängers 22.

Der linke Teil des Kennlinienbildes entsprechend dem Kompensationsmodus soll bei einem ersten Wert I_{SPAD1} des Stromes diskutiert werden. Hier bleibt der Strom für alle Temperaturen unterhalb des Begrenzungsbereichs. Für alle Arbeitspunkte erfolgt die Temperaturkompensation mit einem typischen Temperatur- oder Kompensationskoeffizienten von etwa 20-30 mV/K. Entsprechend dem horizontalen Verlauf der Kennlinien einer idealen Spannungsquelle ist der Spannungsabfall von U_{Komp} vom Strom und damit auch dem einfallenden Licht unabhängig. Das ist auch in der Praxis zumindest annähernd erreichbar.

Es ist aber auch ein leicht ansteigender Verlauf der Kennlinien denkbar. Damit wird die Auslöseempfindlichkeit bei größeren Strömen, folglich stärkerem Lichteinfall, etwas herabgesetzt. Verringert man entsprechend dem ansteigenden Verlauf der Kennlinie die Vorspannung, so wird die Auslöseempfindlichkeit herabgesetzt. Dieser Effekt kann beispielsweise gezielt zur Steigerung des Dynamikbereichs genutzt werden. Technisch kann die Neigung sehr einfach durch Hinzuschalten eines einfachen Serienwiderstands in die Leitung für die Vorspannung U_{Bias} außerhalb der Temperaturkompensationseinheit 56 erreicht werden. Das Ausmaß der Neigung hängt direkt vom Widerstandswert ab, der zwischen zwei Extremen wählbar ist: kein Serienwiderstand bei horizontalem Verlauf der Kennlinie entsprechend einer idealen Spannungsquelle und ein gegen unendlich laufender Serienwiderstand bei nahezu senkrechter Neigung entsprechend einer idealen Stromquelle. Allerdings ist eine große Neigung praktisch nicht nützlich, es kommt also tatsächlich nur ein niederohmiger Serienwiderstand in Betracht. In jedem Fall sollten für eine optimale Temperaturkompensation die Kennlinien parallel zueinander verlaufen und somit überall dem Temperaturgradienten der Lawinenphotodiodenelement 24 entsprechen.

Der rechte Teil des Kennlinienbildes entsprechend dem Strombegrenzungsmodus beginnt je nach Temperatur bei unterschiedlichen Strömen an der jeweiligen Knickstelle der Kennlinien. Bei einem zweiten Wert I_{SPAD2} des Stromes befindet sich der Arbeitspunkt nur noch für die niedrigste Temperatur ϑ1 im regulären Kompensationsmodus. Für die höheren Temperaturen ϑ2 und ϑ3 haben sich die Arbeitspunkte hingegen schon in den Strombegrenzungsmodus verschoben.

Innerhalb des Strombegrenzungsmodus fallen die Kennlinien steil ab. Um im Beispiel von I_{SPAD2} und den höheren Temperaturen ϑ2 und ϑ3 zu bleiben, ist hier die Vorspannung schon deutlich reduziert. Das verringert die Auslöseempfindlichkeit der Lawinenphotodiodenelemente 24 und damit den Strom, wobei sonst gleiche Bedingungen und insbesondere gleicher Lichteinfall unterstellt sind. Dieser Einfluss der Vorspannung auf den Strom gilt, solange es noch eine positive Überspannung gibt. Bei Erreichen oder Unterschreiten der Durchbruchspannung kommt der Stromfluss praktisch vollständig zum Erliegen.

Technisch wären auch zumindest nahezu senkrecht verlaufende Kennlinien entsprechend einer idealen Stromquelle möglich. Eine gewisse Neigung, die je nach Auslegung des Lichtempfängers 22 variiert werden kann, ist aber sogar vorteilhaft, weil sich dann ein Arbeitspunkt einstellen kann. Sonst würden schon geringste Änderungen im Strom, sei es durch Lichteinfall oder Rauschanteile, zu gewaltigen Änderungen der Vorspannung führen. Ein stabiler Arbeitspunkt im Begrenzungsbereich ist dann kaum noch möglich.

Die beschriebene Strombegrenzung ist aktiv. Das ermöglicht es, im Kompensationsmodus eine optimale, temperaturkompensierte Vorspannung anzulegen. Bei Überschreitung des temperaturabhängig festgelegten Grenzstroms oder anders ausgedrückt beim Übergang in den Strombegrenzungsmodus wird die Spannung zum Schutz vor zu hoher Verlustleistung reduziert, und es stellt sich ein dynamisches Gleichgewicht ein. Eine passive Strombegrenzung beispielsweise über einen Widerstand dagegen würde auch schon im normalen Arbeitsbereich bei gut vertragenen Strömen Spannungsänderungen an den Lawinenphotodiodenelemente 24 bewirken. Damit wird die durch Temperaturkompensation gewünschte Stabilität nicht mehr optimal erreicht. Neben den Auswirkungen auf die Auslösewahrscheinlichkeit und Verstärkung ist bei Lawinenphotodiodenelementen 24 mit expliziter Driftzone für die Rot-Empfindlichkeit auch eine Veränderung der spektralen Empfindlichkeit denkbar.

## Patentansprüche

1. Lichtempfänger (22) mit einer Vielzahl von Lawinenphotodiodenelementen (24), die jeweils mit einer Vorspannung oberhalb einer Durchbruchspannung vorspannbar und somit in einem Geiger-Modus betreibbar sind, um bei Lichtempfang einen Geigerstrom auszulösen, wobei der Lichtempfänger (22) mehrere Vorspannungsanschlüsse (40a-c) aufweist, die Lawinenphotodiodenelemente (24) mehrere Gruppen (42₁-42ₙ) bilden und die Lawinenphotodiodenelemente (24) einer Gruppe (42₁-42ₙ) von jeweils einem der Vorspannungsanschlüsse (40a-c) versorgt werden,
**dadurch gekennzeichnet,**
**dass** die Vorspannungsanschlüsse (40a-c) unterschiedliche Vorspannungen oberhalb der Durchbruchspannung bereitstellen.

2. Lichtempfänger (22) nach Anspruch 1,
wobei die Lawinenphotodiodenelemente (24) einer Gruppe (42₁-42ₙ) wahlweise mit einer der unterschiedlichen Vorspannungen versorgbar sind.

3. Lichtempfänger (22) nach Anspruch 1 oder 2,
wobei zwischen den Lawinenphotodiodenelementen (24) zumindest einer Gruppe (42₁-42ₙ) und den Vorspannungsanschlüssen (40a-c) ein Umschaltelement (44₁-44ₘ) angeordnet ist.

4. Lichtempfänger (22) nach einem der vorhergehenden Ansprüche,
wobei mindestens zwei der mehreren Vorspannungsanschlüsse (40a-c) nach außen (48) geführt sind.

5. Lichtempfänger (22) nach einem der vorhergehenden Ansprüche,
wobei mindestens einer der Vorspannungsanschlüsse (40a-c) intern ist und
wobei mindestens ein Spannungsanpassungselement (50a-c) vorgesehen ist, um unterschiedliche Vorspannungen aus einer externen Spannung (48) zu erzeugen, wobei insbesondere das Spannungsanpassungselement (50a-c) spannungsabziehend ausgebildet ist.

6. Lichtempfänger (22) nach Anspruch 5,
wobei das Spannungsanpassungselement (50a-c) eine Ansteuerung (52a-c) aufweist, um die zu erzeugende Vorspannung einzustellen.

7. Lichtempfänger (22) nach einem der vorhergehenden Ansprüche,
wobei die Lawinenphotodiodenelemente (24) zumindest einer Gruppe (42₁-42ₙ) fest mit einem jeweiligen Vorspannungsanschluss (40a-c) verbunden sind.

8. Lichtempfänger (22) nach einem der vorhergehenden Ansprüche,
wobei die Gruppen (42₁-42ₙ) ein Schachbrettmuster, ein konzentrisches Muster oder mehrere lateral verschobene Bereiche bilden.

9. Lichtempfänger (22) nach einem der vorhergehenden Ansprüche,
wobei mindestens ein Vorspannungsanschluss (40a-c) eine Vorspannung oberhalb und ein weiterer Vorspannungsanschluss eine Vorspannung unterhalb der Durchbruchspannung bereitstellt.

10. Lichtempfänger (22) nach einem der vorhergehenden Ansprüche,
der mehrere Vorspannungsanschlüsse (40a-c) mit unterschiedlichem positivem Potential und mehrere Vorspannungsanschlüsse (40a2-c2) mit unterschiedlichem negativem Potential aufweist, um Lawinenphotodiodenelemente (24) durch Verbinden von beiden Seiten mit einem positiven Potential und einem negativen Potential mit unterschiedlichen Vorspannungen zu versorgen.

11. Lichtempfänger (22) nach Anspruch 10,
wobei die Gruppen (42₁₁-42ₘ) eine Matrixanordnung bilden und die Vorspannungsanschlüsse (40a-c) mit positivem Potential jeweils mit einer Zeile (42ᵢ₁-42ᵢₘ) oder Spalte (42ᵢⱼ-42ₙⱼ) und entsprechend die Vorspannungsanschlüsse (40a2-c2) mit negativem Potential jeweils mit einer Spalte (42ᵢⱼ-42ₙⱼ) oder Zeile (42ᵢ₁-42ᵢₘ) verbunden sind.

12. Lichtempfänger (22) nach einem der vorhergehenden Ansprüche,
der mindestens ein Temperaturerfassungselement (54) zur Erfassung einer Betriebstemperatur der Lawinenphotodiodenelemente (24) und eine Temperaturkompensationseinheit (56) aufweist, welche die Vorspannungen in Abhängigkeit von der gemessenen Temperatur anpasst, insbesondere alle Vorspannungen zugleich an einem gemeinsam wirkenden Pfad.

13. Lichtempfänger (22) nach einem der vorhergehenden Ansprüche,
der eine aktive Strombegrenzungseinheit (56) aufweist, die bei Überschreiten einer Stromschwelle des in dem Lichtempfänger (22) fließenden Stroms die Vorspannungen absenkt, insbesondere alle Vorspannungen zugleich an einem gemeinsam wirkenden Pfad.

14. Optoelektronischer Sensor (10) mit mindestens einem Lichtempfänger (22) nach einem der vorhergehenden Ansprüche, wobei der Sensor (10) zur Entfernungsmessung nach einem Lichtlaufzeitverfahren und/oder als Codeleser und/oder zur Datenübertragung ausgebildet ist.

15. Verfahren zur Versorgung einer Vielzahl von Lawinenphotodiodenelementen (24) eines Lichtempfängers (22) mit einer Vorspannung, wobei zumindest einige die Lawinenphotodiodenelemente (24) jeweils mit einer Vorspannung oberhalb einer Durchbruchspannung vorgespannt und somit in einem Geiger-Modus betrieben werden und die Lawinenphotodiodenelemente (24) mehrere Gruppen (42₁-42ₙ) bilden,
**dadurch gekennzeichnet,**
**dass** die Lawinenphotodiodenelemente (24) einer Gruppe (42₁-42ₙ) mit einer Vorspannung oberhalb der Durchbruchspannung und die Lawinenphotodiodenelemente (24) einer anderen Gruppe (42₁-42ₙ) mit einer anderen Vorspannung oberhalb der Durchbruchspannung versorgt werden.

## Claims

1. A light receiver (22) having a plurality of avalanche photodiode elements (24) each configured to be biased with a bias voltage above a breakdown voltage and thus to be operated in a Geiger mode for triggering a Geiger current upon light reception, wherein the light receiver (22) comprises a plurality of bias voltage terminals (40a-c), the avalanche photodiode elements (24) form a plurality of groups (42₁-42ₙ), and the avalanche photodiode elements (24) of a group (42₁-42ₙ) are each supplied by one of the bias voltage terminals (40a-c), **characterized in that** the bias voltage terminals (40a-c) provide different bias voltages above the breakdown voltage.

2. The light receiver (22) according to claim 1,
wherein the avalanche photodiode elements (24) of a group (42₁-42ₙ) are selectively supplied with one of the different bias voltages.

3. The light receiver (22) according to claim 1 or 2,
wherein a switching element (44₁-44ₘ) is arranged between the avalanche photodiode elements (24) of at least one group (42₁-42ₙ) and the bias voltage terminals (40a-c).

4. The light receiver (22) according to one of the preceding claims,
wherein at least two of the plurality of bias voltage terminals (40a-c) have an external connection (48).

5. The light receiver (22) according to one of the preceding claims,
wherein at least one of the bias voltage terminals (40a-c) is internal, and wherein at least one voltage adjusting element (50a-c) for generating different bias voltages from one external voltage (48) is provided, and wherein in particular the voltage adjusting element (50a-c) is configured for voltage subtraction.

6. The light receiver (22) according to claim 5,
wherein the voltage adjusting element (50a-c) comprises a control (52a-c) for setting the bias voltage to be generated.

7. The light receiver (22) according to one of the preceding claims,
wherein the avalanche photodiode elements (24) of at least one group (42₁-42ₙ) are fixedly connected to a respective bias voltage terminal (40a-c).

8. The light receiver (22) according to one of the preceding claims,
wherein the groups (42₁-42ₙ) form a checkerboard pattern, a concentric pattern, or several laterally displaced regions.

9. The light receiver (22) according to one of the preceding claims,
wherein at least one bias voltage terminal (40a-c) provides a bias voltage above the breakdown voltage and at least one other bias voltage terminal (40a-c) provides a bias voltage below the breakdown voltage.

10. The light receiver (22) according to one of the preceding claims, providing a plurality of bias voltage terminals (40a-c) having different positive potentials and a plurality of bias voltage terminals (40a2-c2) having different negative potentials in order to supply avalanche photodiode elements (24) with different bias voltages by connections to a positive potential and a negative potential from both sides.

11. The light receiver (22) according to claim 10,
wherein the groups (42₁₁-42ₙₘ ) form a matrix arrangement, and wherein the bias voltage terminals (40a-c) having a positive potential are connected to a line (42ᵢ₁-42ᵢₘ) or a column (42₁ⱼ-42ₙⱼ), and accordingly the bias voltage terminals (40a2-c2) having a negative potential are connected to a column (42₁ⱼ-42ₙⱼ) or a line (42ii-42im).

12. The light receiver (22) according to one of the preceding claims,
having at least one temperature sensing element (54) for detecting an operating temperature of the avalanche photodiode elements (24), and having a temperature compensation unit (56) for adjusting the bias voltages in dependence on the detected operating temperature, in particular all bias voltages at a same time on a common path.

13. The light receiver (22) according to one of the preceding claims,
having an active current limiting unit (56) configured to reduce the bias voltages upon a current flowing in the light receiver (22) exceeding a current threshold, in particular all bias voltages at a same time on a common path.

14. An optoelectronic sensor (10) comprising at least one light receiver (22) according to one of the preceding claims, wherein the sensor (10) is configured for measuring distances according to a time of flight method and/or a code reader and/or for data transmission.

15. A method for supplying a plurality of avalanche photodiode elements (24) of a light receiver (22) with a bias voltage, wherein at least some of the avalanche photodiode elements (24) are each biased with a bias voltage above a breakdown voltage and are thus operated in a Geiger mode, wherein the avalanche photodiode elements (24) form a plurality of groups (42₁-42ₙ), **characterized in that** the avalanche photodiode elements (24) of one group (42₁-42ₙ) are supplied with a bias voltage above the breakdown voltage and the avalanche photodiode elements (24) of another group (42₁-42ₙ) are supplied with a different bias voltage above the breakdown voltage.

## Revendications

1. Récepteur de lumière (22) comportant une multitude d'éléments formant photodiodes à avalanche (24) qui sont susceptibles d'être polarisés chacun par une tension de polarisation supérieure à une tension de claquage et qui peuvent donc fonctionner en mode Geiger, afin de déclencher un courant Geiger lors de la réception de lumière, le récepteur de lumière (22) comprenant plusieurs raccords de tension de polarisation (40a - c), les éléments formant photodiodes à avalanche (24) constituant plusieurs groupes (42₁ - 42ₙ), et les éléments formant photodiodes à avalanche (24) d'un groupe (42₁ - 42ₙ) étant alimentés respectivement par l'un des raccords de tension de polarisation (40a - c),
**caractérisé en ce que**
les raccords de tension de polarisation (40a - c) fournissent différentes tensions de polarisation supérieures à la tension de claquage.

2. Récepteur de lumière (22) selon la revendication 1, dans lequel les éléments formant photodiodes à avalanche (24) d'un groupe (42₁ - 42ₙ) sont susceptibles d'être alimentés au choix avec l'une des tensions de polarisation différentes.

3. Récepteur de lumière (22) selon la revendication 1 ou 2, dans lequel un élément de commutation (44₁ - 44ₘ) est agencé entre les éléments formant photodiodes à avalanche (24) d'au moins un groupe (42₁ - 42ₙ) et les raccords de tension de polarisation (40a - c).

4. Récepteur de lumière (22) selon l'une des revendications précédentes, dans lequel deux au moins parmi la pluralité de raccords de tension de polarisation (40a - c) sont menés vers l'extérieur (48).

5. Récepteur de lumière (22) selon l'une des revendications précédentes, dans lequel l'un au moins des raccords de tension de polarisation (40a - c) est interne, et il est prévu au moins un élément d'adaptation de tension (50a - c) pour générer différentes tensions de polarisation à partir d'une tension externe (48), l'élément d'adaptation de tension (50a - c) étant réalisé en particulier de manière à soustraire la tension.

6. Récepteur de lumière (22) selon la revendication 5, dans lequel l'élément d'adaptation de tension (50a - c) comprend un pilotage (52a - c) pour régler la tension de polarisation à générer.

7. Récepteur de lumière (22) selon l'une des revendications précédentes, dans lequel les éléments formant photodiodes à avalanche (24) d'au moins un groupe (42₁ - 42ₙ) sont fermement connectés à un raccord de tension de polarisation respectif (40a - c).

8. Récepteur de lumière (22) selon l'une des revendications précédentes, dans lequel les groupes (42₁ - 42ₙ) forment un motif en échiquier, un motif concentrique ou plusieurs zones décalées latéralement.

9. Récepteur de lumière (22) selon l'une des revendications précédentes, dans lequel au moins un raccord de tension de polarisation (40a - c) fournit une tension de polarisation supérieure à la tension de claquage, et un autre raccord de tension de polarisation fournit une tension de polarisation inférieure à la tension de claquage.

10. Récepteur de lumière (22) selon l'une des revendications précédentes, comprenant plusieurs raccords de tension de polarisation (40a - c) à potentiel positif différent, et plusieurs raccords de tension de polarisation (40a2 - c2) à potentiel négatif différent, afin d'alimenter des éléments formant photodiodes à avalanche (24) avec différentes tensions de polarisation par connexion des deux côtés à un potentiel positif et à un potentiel négatif.

11. Récepteur de lumière (22) selon la revendication 10, dans lequel les groupes (42₁₁ - 42ₙₘ) constituent une disposition en matrice, et les raccords de tension de polarisation (40a - c) à potentiel positif sont connectés chacun à une ligne (42ᵢ₁ - 42ᵢₘ) ou à une colonne (42₁ⱼ - 42ₙⱼ), et en correspondance les raccords de tension de polarisation (40a2 - c2) à potentiel négatif sont connectés chacun à une colonne (42₁ⱼ - 42ₙⱼ) ou à une ligne (42ᵢ₁ - 42ᵢₘ).

12. Récepteur de lumière (22) selon l'une des revendications précédentes, comprenant au moins un élément de détection de température (54) pour détecter une température de fonctionnement des éléments formant photodiodes à avalanche (24), et une unité de compensation de température (56) qui adapte les tensions de polarisation en fonction de la température mesurée, en particulier toutes les tensions de polarisation simultanément sur un trajet agissant en commun.

13. Récepteur de lumière (22) selon l'une des revendications précédentes, comprenant une unité de limitation de courant (56) active qui, lors du dépassement d'un seuil du courant circulant dans le récepteur de lumière (22), baisse les tensions de polarisation, en particulier toutes les tensions de polarisation simultanément sur un trajet agissant en commun.

14. Capteur optoélectronique (10) comportant au moins un récepteur de lumière (22) selon l'une des revendications précédentes, dans lequel le capteur (10) est réalisé pour la mesure de distance selon une méthode de temps de parcours de lumière et/ou à titre de lecteur de code et/ou pour la transmission de données.

15. Procédé pour alimenter en tension de polarisation une multitude d'éléments formant photodiodes à avalanche (24) d'un récepteur de lumière (22), dans lequel quelques-uns au moins des éléments formant photodiodes à avalanche (24) sont polarisés chacun avec une tension de polarisation supérieure à une tension de claquage et fonctionnent donc en mode Geiger, et les éléments formant photodiodes à avalanche (24) constituent plusieurs groupes (42₁ - 42ₙ),
**caractérisé en ce que**
les éléments formant photodiodes à avalanche (24) d'un groupe (42₁ - 42ₙ) sont alimentés avec une tension de polarisation supérieure à la tension de claquage, et les éléments formant photodiodes à avalanche (24) d'un autre groupe (42₁ - 42ₙ) sont alimentés avec une autre tension de polarisation supérieure à la tension de claquage.
